# EUROPEAN PATENT SPECIFICATION

(11) **EP 1 179 409 B1**
(45) Date of publication and mention of the grant of the patent: **11.08.2004**
(21) Application number: 01118317.5
(22) Date of filing: 27.07.2001
(51) Int. Cl.: B29C 57/06

(54) **Method and apparatus for bell-shaping the ends of pipes**
Verfahren und Vorrichtung zur Muffenherstellung von Rohren
Méthode et appareil pour tuliper les extrémités de tuyaux

(30) Priority: 02.08.2000 IT MI001798
(43) Date of publication of application: 13.02.2002
(73) Proprietor: AQUATECHNIK S.P.A., 21052 BUSTO ARSIZIO (VA) (IT)
(72) Inventor: Petena, Lino, 21052 Busto Arsizio (IT)
(74) Representative: Coloberti, Luigi

(56) References cited:
- DE-U- 29 618 268
- PATENT ABSTRACTS OF JAPAN vol. 1997, no. 11, 28 November 1997 (1997-11-28) -& JP 09 183157 A (YAMANAMI TAKANORI), 15 July 1997 (1997-07-15)

## Description

### FIELD OF THE INVENTION

This invention refers to a method and an apparatus for bell-shaping an end portion of plastic or layered pipes normally used for piping systems for liquid and gaseous fluids; the invention refers also to a shaping bush of special design, used for the bell-shaping an end portion of a pipe as previously referred to.

In particular, the invention is directed to an apparatus for bell-shaping the end portions of pipes, as mentioned previously, comprising a shaping tool and a shaping member, which can be easily transported and used directly at the work site by an operator, to bell-shape the ends of pipes also having different diameters from one another.

### STATE OF THE ART

In the construction of hydraulic, oleo-dynamic and pneumatic systems, for many years widespread use has been made of plastic or layered pipes which are connected each other and to the sanitary facilities, by means of appropriate pipe fittings onto which an end of the pipe must be fitted and fastened to ensure an efficient seal.

In order to facilitate the insertion of the pipe fitting into a pipe, the end portion of the pipe must be shaped into the form of a bell by means of special apparatus which require the use of expanding tools comprising a plurality of expanding sectors which can be spread apart in a radial direction to bell-shape an end of a pipe.

The use of these apparatus however involves considerable limits and drawbacks, both as regards the segmented conformation of the bell shaped end of the pipe, and as regard to the difficulty by an operator in transporting and using the apparatus.

In fact, such apparatus are extremely cumbersome and somewhat unmanageable to use at the work site.

In addition, a segmented conformation of the bell-shaped end of a pipe, in turn involves seal problems, in that the polygonal outline that the bell assumes, does not offer a satisfactory and homogeneous hydraulic seal over the entire peripheral surface of the bell shaped end of the pipe.

From DE-U-296 18 268 and JP-A-09 183157 the use of a tool and a shaping member insertable into an end of a tube is known, in which use in made of an elastically expandable shaping member which is axially compressed between fore and rear pressure members of the tool to cause a radial expansion inside the tube. Use in also is made of an outer sleeve; despite the use of said outer sleeve, the progressive stiffening of the elastically compressible shaping member does not allow any control of the inside diameter of the bell shaped end of the pipe; the sealing of the connected end of pipes may therefore be jeopardized.

It would therefore be desiderable to provide a method and to have apparatus or devices for bell-shaping the ends of pipes, so as to obviate the aforementioned drawbacks.

### OBJECTS OF THE INVENTION

The main object of the invention is to provide a method for bell-shaping the ends of pipes, which is easy to perform and which offers the possibility of maintaining the peripheral outline of a bell-shaped end of a pipe, perfectly circular in order to ensure optimal watertight or sealing conditions.

A further object of the invention is to provide a method for bell-shaping the ends of pipes, as mentioned above, which may be easily adaptable for bell-shaping ends of pipes of any diameter.

A still further object of the invention is to provide an apparatus for bell-shaping the ends of pipes by means of the aforementioned method, which is structurally simple, of minimum overall dimensions and extremely lightweight, and by which it is possible to bell-shape the ends of pipes of different diameters by quick and easy replacement of a few auxiliary shaping parts.

A still further object of this invention is to provide an apparatus of the aforementioned type, suitable either for bench-top use, or for manual use.

A further object of the invention is to provide an auxiliary shaping bush of simple design and suitable for bell shaping an end portion of a pipe by the method and the apparatus referred to above.

### BRIEF DESCRIPTION OF THE INVENTION

The objects of the invention can be achieved by means of a method for bell-shaping the end portions of pipes according to claim 1, by means of an apparatus according to claim 2, and by means of a shaping bush according to claim 8.

The basic feature of this invention lies in the use of a special shaping bush of deformable plastic material, and a special expanding tool, which are inserted into an end of a pipe, by a length substantially equal to that of the bell end to be performed, which is thus shaped by progressively expanding the shaping bush in a radial direction against the inner surface of the pipe end, by forcing and drawing the expanding tool to axially slide along the shaping bush.

### BRIEF DESCRIPTION OF THE DRAWINGS

These and further features of the method and a preferential embodiment of an apparatus and a shaping bush according to the invention, will be more clearly evident from the following description with reference to the accompanying drawings, in which:
Fig. 1 shows a longitudinal cross-sectional view of the apparatus according to the invention;
Fig. 2 shows an enlarged detail view of figure 1;
Fig. 3 shows an enlarged longitudinal sectional view of the shaping bush, before use;
Figs. 4, 5, 6 and 7 show some operative conditions of the apparatus, to illustrate the method for bell-shaping the ends of pipes, according to the invention.

### DETAILED DESCRIPTION OF THE INVENTION

The apparatus according to the invention, for bell-shaping the end portions of pipes of plastic or layered material, substantially comprises a linear actuator 10, a shaping bush 22 made of deformable plastic material, for example polythene, and an expanding tool 19; the tool 19 is operatively and disengageably connected to the actuator, and is forced to slide inside the bush 22, after the same bush 22 and the tool 19 have been inserted into and end portion of a pipe 37 to bell shaped by a progressive radial expansion of the bush against the end portion of the pipe.

The linear actuator 10 may be of any suitable type; for example may be of pneumatic or hydraulic type, comprising a handgrip 11 which houses a double-acting cylinder 12 and an oil pumping unit which can be operated for example by means of a control lever 13.

The double-acting cylinder 12 of the actuator comprises a rod 14 having a shaped head 15, axially sliding along a guide hole 16 which extends substantially along the entire length of the handgrip 11; the handgripping 12 is provided with a threaded end 17 onto which is screwed a guide member 18 for an expanding tool 19. The tool 19, as shown, comprises a shaped head 20 having a cylindrical portion and a conical portion at the forward end of a stem 21, and is of such shape as to gradually and evenly expand the bush 22 of deformable plastic material, and consequently to bell-shape the end portion of a pipe, as explained further on.

The stem 21 of the expanding tool 19 comprises a first stem portion of reduced diameter, to freely slide inside the hole of the shaping bush, and an intermediate cylindrical portion 21', between the stem portion 21 and the shaping head 20, having a diameter larger than the diameter of the first stem portion 21, and the inside diameter, or diameters of the hole 22B of the shaping bush 22.

The stem portion 21 of the expanding tool 19 freely passes through an axial hole 23 in the guide member 18, to engage and disengage with an automatic clamping device at the head 15 of the rod 14 of the cylinder 12.

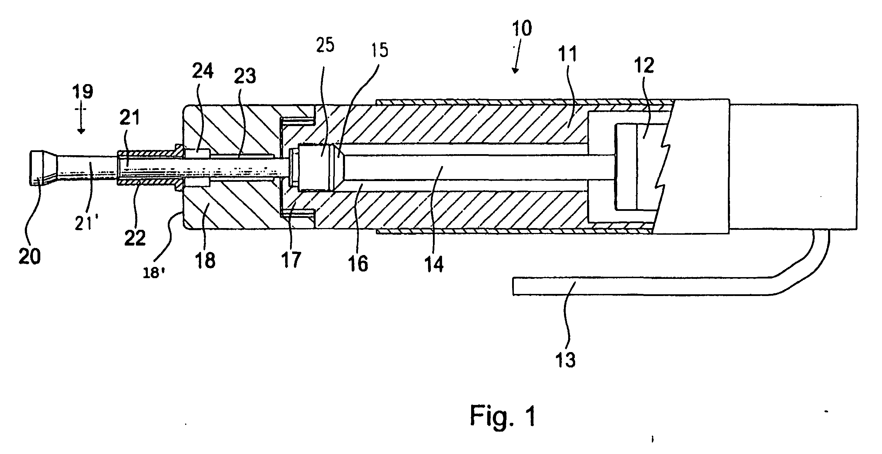

As shown in figure 1, the hole 23 in the guide member 18, at the fore end, opens into a widened cavity 24 suitable for housing the shaped head 20 of the expanding tool 19.

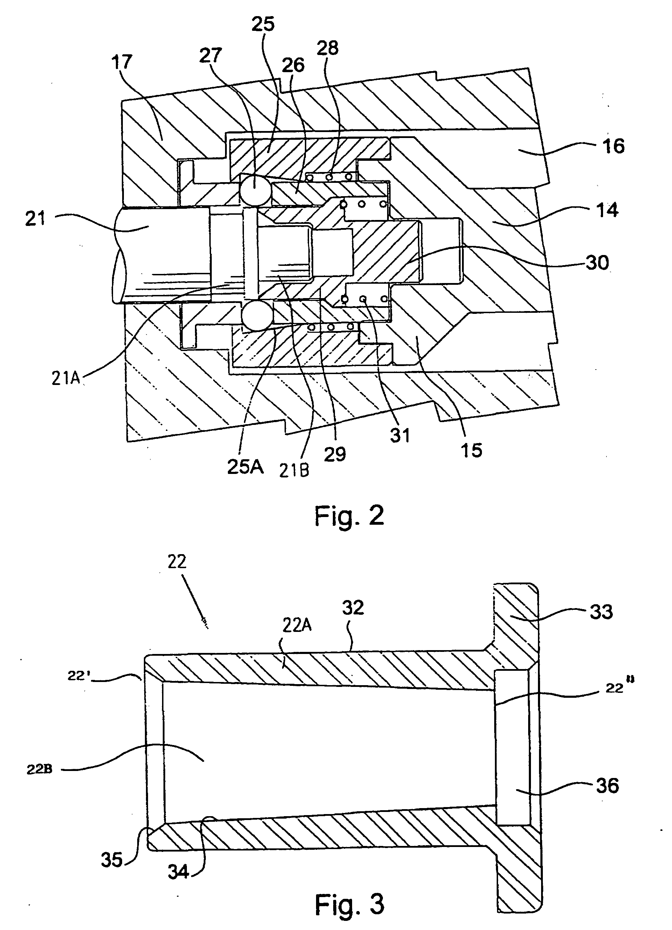

As shown in figure 2, the stem 21 of the expanding tool at its rear end is provided with an annular groove 21A, and extends with a shank 21B of reduced diameter, to penetrate into a ball type collet comprising an external bushing 25, axially sliding with respect to an internal bushing 26 screwed onto the head 15 of the rod 14 of the control cylinder.

The internal bushing 26, in an intermediate position, comprises a set of circumferentially arranged radial holes for a plurality of clamping balls 27, designed to engage with the annular groove 21A at the rear end of the stem 21 of the expanding tool.

The external bushing 25 in turn presents a conical inner surface 25A which converges in the direction of the head 15, and is biased forward by a spring 28.

The balls 27 of the collet are normally maintained in a disengaged condition of the stem 21, by means of a cup-shaped stop member 29, having a guide shank 30 axially sliding with respect to the internal bushing 26 and to the head 15, of the cylinder rod 14, against the action of a biasing spring 31.

From figure 2 it is evident therefore that, by inserting the stem 21 of the tool 19 into the guide member 18, making it slide axially, the cup-shaped element 29 is made to move backward far enough the balls 27 and engage the annular groove 23 at the rear end of the stem 21; in this condition, the external bushing 25, thrust forward by the spring 28, with the conical surface 25A maintains the balls 27 engaged with the tool 19 thereby enabling the necessary drawing action to be exerted by means of the cylinder 12 of the actuator. Conversely, pushing the head 15 forward with the cup-shaped member 29, will cause dislodgement of the balls 27 from the groove 23 and disengagement of the tool from the actuator.

With reference to figure 3, a detailed description is now given of the deformable shaping bush 22, constituting a substantial part of the method and apparatus according to the invention.

As shown in figure 3, the bush 22 comprises a tubular body 22A of plastic material which extends axially for a length substantially corresponding to the length of the bell 37A to be formed at an end portion of a pipe; the bush body 22 comprises a cylindrical outer surface 32 which extends between the fore end 22' and a rear flange 33 providing a resting portion for the pipe end for urging the bush 22 against a shoulder surface 18' at the fore end of the guide member of the actuator, as well as for resting the end of a pipe 37.

The bush 22, in the example of figure 3, in turn presents an hole 22B having a conical inner surface 34, which converges in the direction of the flange 33 at the rear end of the bush, from a widely flared bore 35 at the fore end of the bush 22 opposite the flange 33. The inner surface 34 of the bush 22 in turn opens towards widened cylindrical cavity 36 in correspondence with the flange 33.

The axial lengths and angular tapering of the conical surfaces 34 and 35 should be appropriately calculated and correlated to the shape of the bell-shaped end portion of the pipe to be formed; more precisely, the flared portion 35 serves tc initially shape a conical portion of the bush 22 at the end portion of the pipe, while the length and tapering of the inner conical surface 34 are correlated to the length and shape of the remaining bell portion 37A to be formed. More precisely, whenever it is necessary to shape a conical bell, the internal surface 34 of the bush 22 must have an identical tapering ratio to that of the bell be formed, but in dual form, that is to say with a tapering opposite to that of the bell wall.

On the contrary, the cavity 36 must have a diameter larger than the head 20 of the expanding tool, to prevent local deformation of the bush 22 upon completion of the bell shaping. Figure 3 shows a bush 22 having a conical inner surface to gradually expand the bell to be formed at the end of a pipe, as explained further on; however, the bush 22 could present an internal surface with a different longitudinal shape from the one shown, for example, cylindrical, to likewise form the bell.

With reference to figures from 4 to 7, a description will now be given of the method for bell-shaping an end portion of a pipe of plastic or layered material, according to this invention.

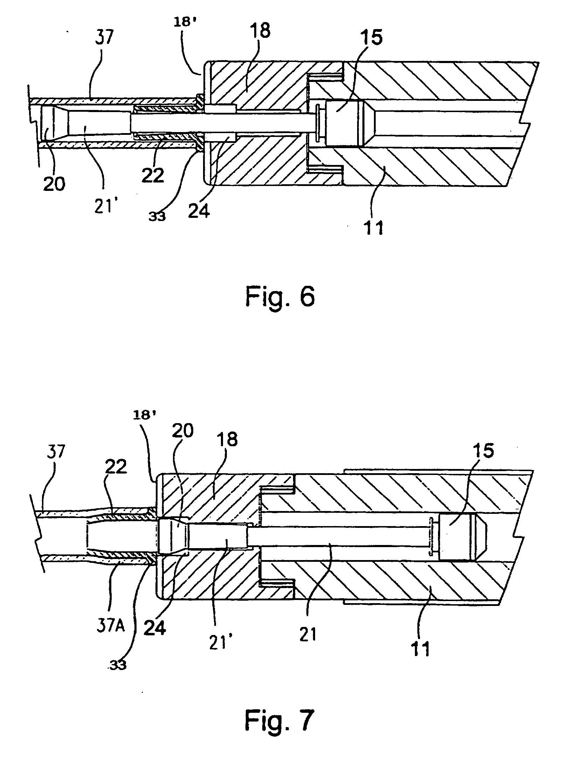

As shown in said figures, the method for bell-shaping an end portion of a pipe, comprises the steps of providing a bush 22 of deformable plastic material, as described previously, that is having a cylindrical outer surface which conforms to the internal cylindrical surface of an end portion of a pipe, and an inner surface having a longitudinal profile parallel to or converging in opposite direction in respect to the outer surface of the same bush or the longitudinal inner profile of the bell to be formed; providing a tool 19 having a head 20 shaped for radially expanding the bush 22, and disposing the shaping bush on the tool, or inserting the latter into the bush 22 before operatively connecting the expanding tool to an actuator. The expanding tool 19 with the bush 22 is then inserted into one end portion of a pipe 37 to be bell-shaped, as shown in figure 6, with the flange 33 of the bush 22 resting against the front surface 18' of the guiding member 18 for the tool. Lastly, the end portion 37A of the pipe 37 is shaped into the form of a bell by causing a progressive expansion of the bush 22 against the inner surface of the cylindrical wall of the pipe 37, by forcibly sliding the head 20 of the expanding tool along the inner surface of the bush 22 exerting a drawing action by means of the actuator 10, while the bush 22 and the end portion of the pipe 37 are held against the front stop surface of the guide member 18.

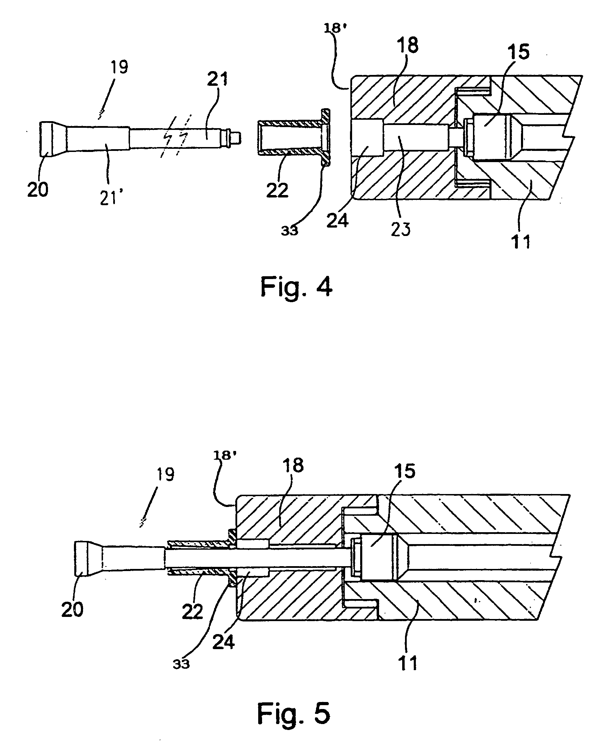

Figures 4 to 7 show the basic steps of the method for bell-shaping the end portion of a pipe, illustrated previously.

It is clearly evident from that described and shown with reference to the example of the accompanying drawings, that has been provided a method and an apparatus for bell-shaping the end portion of pipes of plastic or layered material, which make use of a special deformable bush and expanding tool having a design capable of giving the required bell-shaped profile to an end of a pipe; although what has been shown is a bush suitable for forming a truncated cone shaped bell, with a flaring angle of a few degrees, for example ranging from 8° to 15°, referred to the longitudinal axis of the bell, it is nevertheless understood that by modifying the shape and dimension of the bush 22, or the degree of interference between the head 20 of the tool 19 and the bush 22, it is possible to obtain bell-end portions of different shapes.

It is understood therefore that what has been described and shown, has been given purely by way of example in order to illustrate the invention and that further modifications or variations may be made to the bush, the tool and the actuator, without however deviating from scope of the appended claims.

## Claims

1. A method for bell-shaping an end portion (37A) of a pipe (37) in plastic or layered material, by providing a shaping bush (22) having a cylindrical outer surface (32) conforming to the inner surface of the pipe (37), and an inner surface (34) extending between a fore and a rear end; and
- an expanding tool (19) operatively and disengageably connectable to a linear actuator (10), said expanding tool (19) having a shaped head (20), the method including the steps of:
- disposing the shaping bush (22) onto the expending tool (19) and into the end portion (37A) of the pipe (37); and
- bell-shaping the end portion (37A) of the pipe (37) by progressively expanding the shaping bush (22) against the inner surface (34) of the pipe end portion (37A) while maintaining the pipe end (37A) and the shaping bush (22) resting against a shoulder surface (18') of the linear actuator (10),
**characterized by** the steps of
- providing a shaping bush (22) in deformable plastic material, said shaping bush (22) ending with a flange (33) at the rear end for resting the end portion (37A) of the pipe (37); and
- bell-shaping the end portion (37A) of the pipe (37) by forcibly drawing the head (20) of the tool (19) to slide along the inner surface (34) of the bush (22).

2. Apparatus for bell-shaping an end portion (37A) of a pipe (37) in plastic or layered material, the apparatus comprising:
- a linear actuator (10);
- a shaping bush (22) having a cylindrical outer surface (32) and an inner surface (34) extending between a fore and a rear end of the bush (22); and
- an expanding tool (19) having a shaped head (20) and a stem (21), said expanding tool (19) being operatively and disengageably connectable to the linear actuator (10)
**characterized in that**:
said shaping bush (22) comprises a tubular body (22A) in deformable plastic material ending with a rear flange (33), and a conical or cylindrical inner surface (34) having a maximum diameter at its fore end;
said expanding tool (19) having a shaped head (20) comprising a cylindrical portion having a maximum diameter larger that said maximum diameter of the inner surface (34) of the bush (22), and a conical portion at the forward end of the stem (21).

3. Apparatus according to claim 2, **characterised in that** the linear actuator (10) comprises an automatic clamping device (25) for the expanding tool (19).

4. Apparatus according to claim 2, **characterised in that** the expanding tool (19) comprises an intermediate cylindrical stem portion (21') having a diameter larger than the maximum diameter of the inner surface (34) of the shaping bush (22), which extends from the conical portion of the head (20) of the same expanding tool (19).

5. Apparatus according to claim 2, **characterised in that** the actuator (10) comprises a guide member (18) for the expanding tool (19), said guide member (18) having a longitudinal guide hole (23) for the tool (19), and a front cavity for housing the shaped head (20) of the expanding tool (19).

6. Apparatus according to claim 5, **characterised in that** said guide member (18) for the tool (19), is removably secured to the linear actuator.

7. Apparatus according to claim 3, **characterised in that** the automatic clamping device (25) for the expanding tool (19) comprises a ball-type collet (25-29).

8. A shaping bush (22) for bell-shaping an end portion of a pipe (37) in plastic or layered material, said bush (22) having an outer cylindrical surface (32) a longitudinal bore conforming to the inner surface of the end portion of the pipe (37) and axially extending between a fore and a rear end;
**characterized by** comprising a tubular body (22A) in deformable plastic material and
a flange member (33) at the rear end of said bush;
said tubular body (22A) of the shaping bush (22) comprising an inner surface (34) opening into a widened cavity coplanary arranged to the flange member (33) at the rear end of the shaping bush (22).

9. A shaping bush (22) according to claim 8, **characterised in that** said tubular body (22A) comprises a longitudinal bore having an inner cylindrical surface (34).

10. A shaping bush (22) according to claim 8, **characterised in that** said tubular body (22A) comprises a longitudinal bore having an inner conical surface (34) tapering towards said rear end.

11. A shaping bush (22) according to claim 8, 9 or 10 **characterised in that** said longitudinal bore comprises a conically widening portion (35) at the fore end.

## Patentansprüche

1. Verfahren zur Muffenherstellung an einem Endbereich (37A) eines Rohres (37) aus Plastik- oder Verbundmaterial mittels einer Formungsbuchse (22) mit einer zylindrischen Außenfläche (32), die an die Innenfläche des Rohres (37) angepasst ist, und mit einer Innenfläche (34), die sich zwischen einem vorderen und einem hinteren Ende erstreckt; und
- einem Aufweitwerkzeug (19), das ein- und ausrückbar mit einem Linearantrieb (10) verbindbar ist, wobei das besagte Aufweitwerkzeug (19) einen Formkopf (20) aufweist;
das verfahren einbeziehend die schritte:
- Positionierung der Formungsbuchse (22) auf dem Aufweitwerkzeug (19) und in dem Endbereich (37A) des Rohres (37); und
- glockenartiges Umformen des Endbereichs (37A) des Rohres (37) durch stufenweise Ausdehnung der Formungsbuchse (22) gegen die Innenfläche (34) des Endbereichs (37A) des Rohres (37) bei gleichzeitiger Aufrechterhaltung des Kontakts des Endbereichs (37A) und der Formungsbuchse (22) an einer Schulterfläche (18') des Linearantriebs (10),
**gekennzeichnet durch** die nachfolgenden Verfahrensschritte:
- Einbringen der Formungsbuchse (22) in deformierbares Plastikmaterial, wobei die besagte Formungsbuchse (22) mit einem Kragen (33) am vorderen Ende des Endbereiches (37A) des Rohres (37) zur Anlage kommt; und
- glockenartiges Umformen des Endbereiches (37A) des Rohres (37) **durch** Ziehen des Kopfes (20) des Werkzeuges (19), so dass diese entlang der Innenfläche (34) der Formungsbuchse (22) gleitet.

2. Vorrichtung zur Muffenherstellung eines Endbereichs (37A) eines Rohres (37) aus Plastik- oder Verbundmaterial, umfassend:
- einen Linearantrieb (10);
- eine Formungsbuchse (22) mit einer zylindrischen Außenfläche (32) und einer Innenfläche (34), die zwischen einem vorderen und einem hinteren Ende der Formungsbuchse (22) verläuft; und
ein Aufweitwerkzeug (19) mit einem Formkopf (20) und einem Schaft (21), wobei das besagte Aufweitwerkzeug (19) ein- und ausrückbar mit dem Linearantrieb (10) verbindbar ist, **dadurch gekennzeichnet, dass** die besagte Formungsbuchse (22) einen rohrartigen Körper (22A) für deformierbares Plastikmaterial aufweist mit einem hinteren Kragen (33), und einer zylindrischen oder kegeligen inneren Fläche (34), welche den größten Durchmesser am vorderen Ende aufweist;
- wobei das besagte Aufweitwerkzeug (19) einen Formkopf (20) aufweist, umfassend einen zylindrischen Bereich mit einem maximalen Durchmesser, der größer ist als der besagte maximale Durchmesser der inneren Fläche (34) der Formungsbuchse (22), und einem kegeligen Bereich am vorderen Ende des Schafts (21).

3. Vorrichtung nach Anspruch 2, **dadurch gekennzeichnet, dass** die Lineareinheit (10) eine automatische Spanneinrichtung (25) für das Aufweitwerkzeug (19) umfasst.

4. Vorrichtung nach Anspruch 2, **dadurch gekennzeichnet, dass** das Aufweitwerkzeug (19) einen mittleren zylindrischen Schaftbereich (21') aufweist, der einen größeren Durchmesser als der maximale Durchmesser der inneren Fläche (34) der Formungsbuchse (22) aufweist, welcher sich vom kegeligen Bereich des Formkopfes (20) des Aufweitwerkzeugs (19) aus erstreckt.

5. Vorrichtung nach Anspruch 2, **dadurch gekennzeichnet, dass** die Lineareinheit (10) ein Führungsmittel (18) für das Aufweitwerkzeug (19) umfasst, wobei das besagte Führungsmittel (18) eine sich längs erstreckende Führungsbohrung (23) für das Aufweitwerkzeug (19) umfasst, und eine vordere Ausnehmung zur Unterbringung des Formkopfes (20) des Aufweitwerkzeugs (19) besitzt.

6. Vorrichtung nach Anspruch 5, **dadurch gekennzeichnet, dass** das besagte Führungsmittel (18) des Aufweitwerkzeugs (19) lösbar an dem Linearantrieb (10) angebracht ist.

7. Vorrichtung nach Anspruch 3, **dadurch gekennzeichnet, dass** die automatische Spanneinrichtung (25) für das Aufweitwerkzeug (19) ein Kugelspannfutter (25-29) aufweist.

8. Formungsbuchse (22) für die Muffenherstellung an einem Endbereich eines Rohres (37) aus Plastik- oder Verbundmaterial, welche eine äußere zylindrische Fläche (32) aufweist, und eine an die innere Fläche des Endbereiches des Rohres (37) angepasste Längsbohrung, die sich axial zwischen einem vorderen und einem hinteren Ende erstreckt; sowie am hinteren Ende einen Kragen (33) aufweist, **gekennzeichnet durch** einen rohrförmigen Körper (22A) zur Einführung in deformierbares Plastikmaterial, wobei der besagte rohrartige Körper (22A) der Formungsbuchse (22) eine innere Fläche (34) aufweist, die in eine aufgeweitete Ausnehmung mündet, planparallel angeordnet zum Kragen (33) des hinteren Endes der Formungsbuchse (22).

9. Formungsbuchse (22) nach Anspruch 8, **dadurch gekennzeichnet, dass** der besagte rohrartige Körper (22A) eine sich längserstreckende Bohrung mit einer inneren zylindrischen Fläche (34) aufweist.

10. Formungshülse (22) nach Anspruch 8, **dadurch gekennzeichnet, dass** der besagte rohrartige Körper (22A) eine sich längserstreckende Bohrung aufweist, welche eine innere kegelige Fläche (34) aufweist, die sich zum hinteren Ende hin verjüngt.

11. Formungsbuchse (22) nach Anspruch 8, 9 oder 10, **dadurch gekennzeichnet, dass** die sich längserstreckende Bohrung einen sich konisch erweiternden Bereich (35) am vorderen Ende aufweist.

## Revendications

1. Procédé pour tuliper une partie d'extrémité (37A) d'un tuyau (37) en plastique ou en matériau multicouche, en prenant une douille de formage (22) ayant une surface extérieure cylindrique (32) qui se conforme à la surface intérieure du tuyau (37), et une surface intérieure (34) s'étendant entre une extrémité avant et une extrémité arrière ; et
- un outil élargisseur (19) connectable fonctionnellement et de manière libérable à un actionneur linéaire (10), ledit outil élargisseur (19) ayant une tête évasée (20),
le procédé comprenant les étapes consistant à :
- déposer la douille de formage (22) sur l'outil élargisseur (19) et dans la partie d'extrémité (37A) du tuyau (37) ; et
- tuliper la partie d'extrémité (37A) du tuyau (37) en élargissant progressivement la douille de formage (22) contre la surface intérieure (34) de la partie d'extrémité (37A) du tuyau tout en maintenant l'extrémité (37A) du tuyau et la douille de formage (22) en appui contre une surface d'épaulement (18') de l'actionneur linéaire (10),
**caractérisé par** les étapes consistant à :
- prendre une douille de formage (22) en matière plastique déformable, ladite douille de formage (22) se terminant par une bride (33) en son extrémité arrière pour permettre l'appui de la partie d'extrémité (37A) du tuyau (37) ; et
- tuliper la partie d'extrémité (37A) du tuyau (37) en tirant de force la tête (20) de l'outil (19) pour la faire glisser le long de la surface intérieure (34) de la douille (22).

2. Appareil pour tuliper une partie d'extrémité (37A) d'un tuyau (37) en plastique ou en matériau multicouche, l'appareil comprenant :
- un actionneur linéaire (10) ;
- une douille de formage (22) ayant une surface extérieure cylindrique (32) et une surface intérieure (34) s'étendant entre une extrémité avant et une extrémité arrière de la douille (22) ; et
- un outil élargisseur (19) ayant une tête évasée (20) et une tige (21), ledit outil élargisseur (19) étant connectable fonctionnellement et de manière libérable à l'actionneur linéaire (10),
**caractérisé en ce que** :
ladite douille de formage (22) comprend un corps tubulaire (22A) en matière plastique déformable se terminant par une bride arrière (33), et une surface intérieure conique ou cylindrique (34) ayant un diamètre maximal en son extrémité avant ;
ledit outil élargisseur (19) ayant une tête évasée (20) comprenant une partie cylindrique ayant un diamètre maximal plus grand que ledit diamètre maximal de la surface intérieure (34) de la douille (22), et une partie conique à l'extrémité avant de la tige (21).

3. Appareil selon la revendication 2, **caractérisé en ce que** l'actionneur linéaire (10) comprend un dispositif de serrage automatique (25) pour l'outil élargisseur (19).

4. Appareil selon la revendication 2, **caractérisé en ce que** l'outil élargisseur (19) comprend une partie de tige intermédiaire cylindrique (21') ayant un diamètre plus grand que le diamètre maximal de la surface intérieure (34) de la douille de formage (22), qui s'étend depuis la partie conique de la tête (20) dudit outil élargisseur (19).

5. Appareil selon la revendication 2, **caractérisé en ce que** l'actionneur (10) comprend un élément de guidage (18) pour l'outil élargisseur (19), ledit élément de guidage (18) comportant un trou de guidage longitudinal (23) pour l'outil (19), et une cavité avant pour recevoir la tête évasée (20) de l'outil élargisseur (19).

6. Appareil selon la revendication 5, **caractérisé en ce que** ledit élément de guidage (18) pour l'outil (19) est fixé à l'actionneur linéaire de manière amovible.

7. Appareil selon la revendication 3, **caractérisé en ce que** le dispositif de serrage automatique (25) pour l'outil élargisseur (19) comprend une douille de serrage à billes (25-29).

8. Douille de formage (22) pour tuliper une partie d'extrémité d'un tuyau (37) en plastique ou en matériau multicouche, ladite douille (22) ayant une surface extérieure cylindrique (32) qui se conforme à la surface intérieure de la partie d'extrémité du tuyau (37), et un trou longitudinal s'étendant entre une extrémité avant et une extrémité arrière ;
un élément formant bride (33) à l'extrémité arrière de ladite douille ;
**caractérisée en ce qu'**elle comprend un corps tubulaire (22A) en matière plastique déformable et ledit corps tubulaire (22A) de la douille de formage (22) comprenant une surface intérieure (34) débouchant dans une cavité élargie, agencée de manière coplanaire avec l'élément formant bride (33) à l'extrémité arrière de la douille de formage (22).

9. Douille de formage (22) selon la revendication 8, **caractérisée en ce que** ledit corps tubulaire (22A) comprend un trou longitudinal ayant une surface intérieure cylindrique (34).

10. Douille de formage (22) selon la revendication 8, **caractérisée en ce que** ledit corps tubulaire (22A) comprend un trou longitudinal ayant une surface intérieure conique (34) qui se rétrécit vers ladite extrémité arrière.

11. Douille de formage (22) selon la revendication 8, 9 ou 10, **caractérisée en ce que** ledit trou longitudinal comprend une partie s'élargissant de manière conique (35) à l'extrémité avant.
